# FASCICULE DE BREVET EUROPEEN

(11) **EP 2 469 783 B1**
(45) Date de publication et mention de la délivrance du brevet: **13.12.2017**
(21) Numéro de dépôt: 10196893.1
(22) Date de dépôt: 23.12.2010
(51) Int. Cl.: H04L 27/14

(54) **Récepteur de signaux radiofréquences FSK avec un démodulateur à haute sensibilité ainsi que procédé pour sa mise en action**
FSK-Funksignalempfänger mit hochempfindlichem Demodulator, sowie Verfahren zum Betrieb des Empfängers
FSK radio signal receiver with high-sensitivity demodulator and method for operating said receiver

(43) Date de publication de la demande: 27.06.2012
(73) Titulaire: The Swatch Group Research and Development Ltd., 2074 Marin (CH)
(72) Inventeur: Casagrande, Arnaud, 2014, Bôle (CH); Arend, Jean-Luc, 2000, Neuchâtel (CH)
(74) Mandataire: Ravenel, Thierry Gérard Louis

(56) Documents cités:
- WO-A1-96/32797
- US-A- 5 748 036
- US-A1- 2003 203 729
- US-A1- 2004 190 663
- GRAYVER E ET AL: "A low power FSK receiver for space applications", WIRELESS COMMUNICATIONS AND NETWORKING CONFERNCE, 2000. WCNC. 2000 IEE E 23-28 SEPTEMBER 2000, PISCATAWAY, NJ, USA,IEEE, vol. 2, 23 septembre 2000 (2000-09-23), pages 713-718, XP010532337, ISBN: 978-0-7803-6596-4

## Description

L'invention concerne un récepteur de signaux radiofréquences FSK à démodulateur à haute sensibilité.

L'invention concerne également un procédé de mise en action du récepteur de signaux radiofréquences FSK à démodulateur à haute sensibilité.

Pour la transmission ou réception de données ou commandes par exemple à courte distance, un émetteur ou récepteur conventionnel utilise une modulation du type FSK (Frequency Shift Keying en terminologie anglaise). Si la fréquence porteuse RF est élevée, par exemple de l'ordre de 2.4 GHz, une largeur de bande assez élevée est choisie pour la fréquence intermédiaire, notamment supérieure ou égale à 200 kHz. La déviation de fréquence de modulation dans les signaux modulés peut être adaptée en fonction de cette largeur de bande. Dans ce cas de figure, il peut être utilisé une référence de fréquence fournie par un oscillateur local, qui peut ne pas être très précise et donc bon marché. Cependant il doit être tenu compte de la puissance du bruit thermique, qui est proportionnelle à cette largeur de bande choisie. Ainsi un système de transmission ou réception à large bande n'a en général pas une excellente sensibilité.

En utilisant un oscillateur local muni d'un quartz bon marché, la fréquence des signaux oscillants fournis par cet oscillateur peut varier de l'ordre de ±20 ppm. Pour opérer une conversion de fréquence par un bloc mélangeur avec les signaux radiofréquences captés à 2.4 GHz, l'erreur de fréquence sur les signaux oscillants produits par l'oscillateur local peut être ainsi d'environ ±100 kHz. Dans le but d'augmenter la sensibilité du récepteur, il peut être préférable d'utiliser des signaux radiofréquences à faible débit de données, par exemple de l'ordre de 1 kbits/s. Cependant même si un filtrage passe-bas ou passe-bande est généralement opéré directement sur les signaux intermédiaires fournis par le bloc mélangeur, cela ne permet pas d'opérer un filtrage précis par la suite pour avoir un récepteur à haute sensibilité. Avec un filtrage précis au moyen de filtres à bande étroite, la fréquence des signaux intermédiaires risque de se trouver en dehors des bandes de fréquence des filtres passe-bande à bande étroite. Dans ces conditions, toutes les données ou commandes des signaux radiofréquences captés ne peuvent être prélevées après l'étage de démodulation, ce qui est un inconvénient. Il est donc généralement difficile d'utiliser un quartz bon marché, s'il est espéré opérer une démodulation des données suite à un filtrage passe-bande à bande étroite. L'erreur de fréquence des signaux intermédiaires devrait être absolument corrigée.

Dans le cas d'un récepteur de signaux radiofréquences à modulation du type PSK (Phase Shift Keying en terminologie anglaise) à haut débit de données, il est possible d'avoir une approche synchrone pour la démodulation des données. Ceci se différencie du récepteur de la présente invention, qui utilise une approche asynchrone, et donc non corrélée.

La demande US2004/0190663 A1 décrit la synchronisation de fréquence dans un récepteur FSK se fondant sur la recherche du maximum dans une fonction de puissance calculée sur la base d'une transformée FFT.

L'article de Gravyer et Daneshrad: "A Low Power FSK Receiver for Space Applications", Wireless Communications and Networking Conference, IEEE, vol. 2, 23.09.2000, pages 713-718, ISBN: 978-0-7803-6596-4 divulgue un récepteur FSK utilisant une boucle de verrouillage de fréquence comprenant un DFT. Les pics d'amplitude en sortie de la DFT qui correspondent aux fréquences de modulation de données "1" et "0" sont comparés à leur voisins pour décider si lesdites fréquences doivent être corrigées. La fréquence de l'oscillateur local est corrigée seulement si aucune desdites fréquences tellement adaptées dépasse un seuil associé. Dans la demande de brevet WO 96/32797 A1, il est décrit un récepteur de signaux radiofréquences MFSK. Dans ce récepteur, il est tenu compte des effets liés au mouvement du récepteur et des obstacles sur le chemin des signaux radiofréquences émis. Le récepteur peut recevoir un signal à une fréquence porteuse dans une gamme de fréquences déterminée. Les signaux captés sont amplifiés et filtrés avant d'être convertis en fréquence dans des mélangeurs par des signaux oscillants en phase et en quadrature d'un oscillateur local. Des signaux intermédiaires en phase et en quadrature en sortie des mélangeurs sont filtrés par des filtres passe-bas avant d'être échantillonnés chacun dans un échantillonneur respectif. Un jeu de N échantillons est mémorisé dans une mémoire tampon. Une transformée discrète de Fourier (DFT) est effectuée sur les N échantillons mémorisés et le résultat de la transformée discrète de Fourier est mémorisée dans une mémoire tampon de sortie. La fréquence de l'oscillateur local n'est pas ajustée, ce qui empêche de centrer la fréquence des signaux intermédiaires. De ce fait, il ne peut pas être prévu d'effectuer une démodulation des données à haute sensibilité, ce qui est un inconvénient.

La demande de brevet US 2003/0203729 A1 décrit principalement une compensation de fréquence dans un récepteur de signaux radiofréquences GFSK. La fréquence des signaux radiofréquences à capter peut se situer entre 2.4 et 2.4835 GHz être de l'ordre de 2.4 GHz selon le réseau Bluetooth. La fréquence de l'oscillateur local doit être ajustée pour éliminer tout écart de fréquence par rapport à la fréquence des signaux captés. Pour ce faire, un détecteur de pics des signaux captés est prévu pour déterminer une valeur positive de pic maximum et une valeur négative de pic maximum de signaux RF captés. Le point milieu entre les valeurs positive et négative des pics représente la fréquence centrale détectée. Cela permet ainsi d'ajuster à la fréquence souhaitée, la fréquence de l'oscillateur dans la boucle de compensation automatique de fréquence AFC pour une démodulation des données. La détermination de l'écart de fréquence est effectuée à haute fréquence pour pouvoir ajuster la fréquence de l'oscillateur, et rien n'est prévu pour réduire la consommation électrique de ce récepteur, ce qui est un inconvénient.

L'invention a donc pour but de fournir un récepteur de signaux radiofréquences FSK, qui est à haute sensibilité et facilement configurable pour pouvoir centrer la fréquence des signaux intermédiaires avant une opération de démodulation à haute sensibilité tout en palliant les inconvénients susmentionnés de l'état de la technique.

A cet effet, l'invention concerne un récepteur de signaux radiofréquences FSK, qui comprend les caractéristiques mentionnées dans la revendication indépendante 1.

Des formes particulières du récepteur sont définies dans les revendications dépendantes 2 à 8.

Un avantage d'un tel récepteur de signaux radiofréquences FSK selon l'invention réside dans le fait qu'il est utilisé un circuit de traitement des signaux intermédiaires échantillonnés. Ce circuit de traitement utilise une transformée de Fourier discrète (DFT) pour contrôler à quelle fréquence se situe chaque pic de puissance en dessus d'un seuil déterminé. Cette transformée de Fourier discrète est rapide et réalisée sur une bande de fréquences limitée par exemple de l'ordre de 200 kHz centrée sur la fréquence centrale des signaux intermédiaires. Cette bande de fréquences limitée se base sur l'erreur possible de fréquence de l'oscillateur local, qui peut être muni d'un quartz bon marché. Ainsi une forte réduction de consommation est constatée comparativement à une transformée de Fourier rapide (FFT), qui traite les signaux sur toute la largeur de bande échantillonnée. En fonction de ce traitement par DFT, il est possible d'ajuster la fréquence de l'oscillateur local sur la base de la fréquence des signaux radiofréquences captés, afin d'ajuster la fréquence centrale des signaux intermédiaires. Ces signaux radiofréquences FSK sont de préférence à faible débit. Ceci permet d'opérer une démodulation à haute sensibilité facilement, étant donné qu'avec un faible débit des données ou commandes, la puissance des signaux FSK captés est concentrée autour de la déviation de fréquence de modulation.

Avantageusement, une fois que la fréquence des signaux oscillants de l'oscillateur local a été adaptée, il est possible d'effectuer une démodulation par l'étage de démodulation à haute sensibilité. Cet étage de démodulation comprend un premier filtre numérique à bande étroite pour filtrer les signaux intermédiaires échantillonnés ayant une déviation de fréquence positive, et un second filtre numérique à bande étroite pour filtrer les signaux intermédiaires échantillonnés ayant une déviation de fréquence nulle ou négative. Les signaux en sortie des filtres numériques passent tout d'abord chacun par un détecteur d'énergie avant d'effectuer une soustraction entre les signaux provenant des deux filtres numériques afin de fournir des signaux de données ou commandes.

Avantageusement, l'étage de démodulation à haute sensibilité comprend un premier démodulateur DFT pour démoduler les signaux intermédiaires échantillonnés ayant une déviation de fréquence positive, et un second démodulateur DFT pour démoduler les signaux intermédiaires échantillonnés ayant une déviation de fréquence nulle ou négative. Les signaux en sortie des démodulateurs DFT sont par la suite soustraits de manière à fournir des signaux de données ou commandes.

A cet effet, l'invention concerne également un procédé de mise en action du récepteur de signaux radiofréquences FSK, qui comprend les caractéristiques définies dans la revendication indépendante 9.

Des étapes particulières du procédé sont définies dans les revendications dépendantes 10 à 14.

Un avantage du procédé selon l'invention réside dans le fait qu'après au moins une phase d'acquisition d'un certain nombre de points des signaux intermédiaires par l'échantillonneur, il est effectué au moins une transformée de Fourier discrète par exemple à 1 bit sur une bande de fréquences limitée. Le ou les résultats des transformées de Fourier discrètes peuvent être mémorisés. Un contrôle de la fréquence du ou des pics d'amplitude au-dessus d'un seuil déterminé, est effectué afin d'estimer l'erreur de fréquence par rapport à une fréquence attendue avec une déviation positive ou négative de fréquence de modulation des signaux intermédiaires. Une correction de fréquence est par la suite opérée dans l'oscillateur local pour adapter la fréquence des signaux oscillants et permettre de recentrer la fréquence des signaux intermédiaires avant une démodulation à haute sensibilité.

Avantageusement, une double acquisition par l'échantillonneur des signaux intermédiaires, et une double transformée de Fourier discrète des signaux intermédiaires échantillonnés, sont effectuées en des périodes différentes. Une mémorisation des deux résultats de la transformée de Fourier discrète est effectuée. Un algorithme de recherche à n vecteurs importants permet par le suite de comparer les pics d'amplitude au-dessus d'un seuil déterminé des deux résultats mémorisés pour déterminer tout pic parasite de signaux captés perturbateurs. En fonction des pics d'amplitude sélectionnés à fréquence différente, la fréquence des signaux oscillants est corrigée pour pouvoir recentrer la fréquence centrale des signaux intermédiaires. Ainsi, une démodulation à haute sensibilité des signaux intermédiaires échantillonnés peut être effectuée.

Les buts, avantages et caractéristiques du récepteur de signaux radiofréquences FSK à haute sensibilité, et son procédé de mise en action apparaîtront mieux dans la description suivante sur la base de formes d'exécution non limitatives illustrées par les dessins sur lesquels :
la figure 1 représente de manière simplifiée une première forme d'exécution du récepteur de signaux radiofréquences FSK à haute sensibilité selon l'invention,
la figure 2 représente de manière simplifiée une seconde forme d'exécution du récepteur de signaux radiofréquences FSK à haute sensibilité selon l'invention,
la figure 3 représente un graphique simplifié dans le domaine fréquentiel de la puissance des signaux intermédiaires échantillonnés suite à une transformée de Fourier discrète dans le récepteur de signaux radiofréquences FSK selon l'invention,
la figure 4 représente un organigramme d'étapes du procédé de mise en action du récepteur de signaux radiofréquences FSK, selon l'invention, et
les figures 5a et 5b représentent un graphique temporel simplifié des signaux provenant d'un émetteur et des signaux captés par le récepteur de signaux radiofréquences FSK selon l'invention, ainsi qu'un graphique simplifié de la puissance des signaux intermédiaires échantillonnés dans le domaine fréquentiel suite à des transformées de Fourier discrètes.

Dans la description suivante, tous les composants du récepteur de signaux radiofréquences FSK, qui sont bien connus d'un homme du métier dans ce domaine technique, ne sont décrits que de manière simplifiée. Ledit récepteur de signaux radiofréquences FSK peut avantageusement être utilisé par exemple dans des systèmes de transmission de données ou commandes à courte distance.

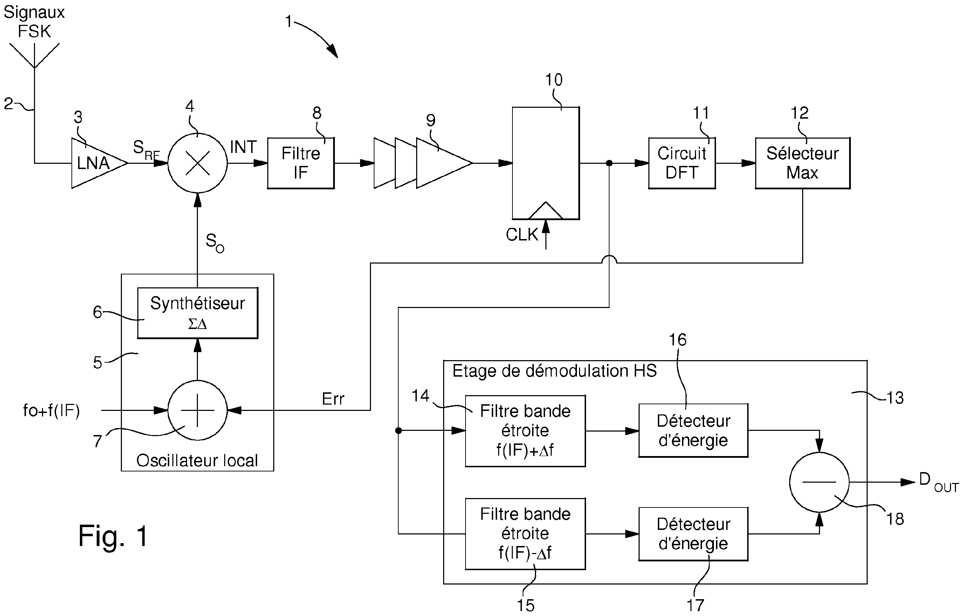

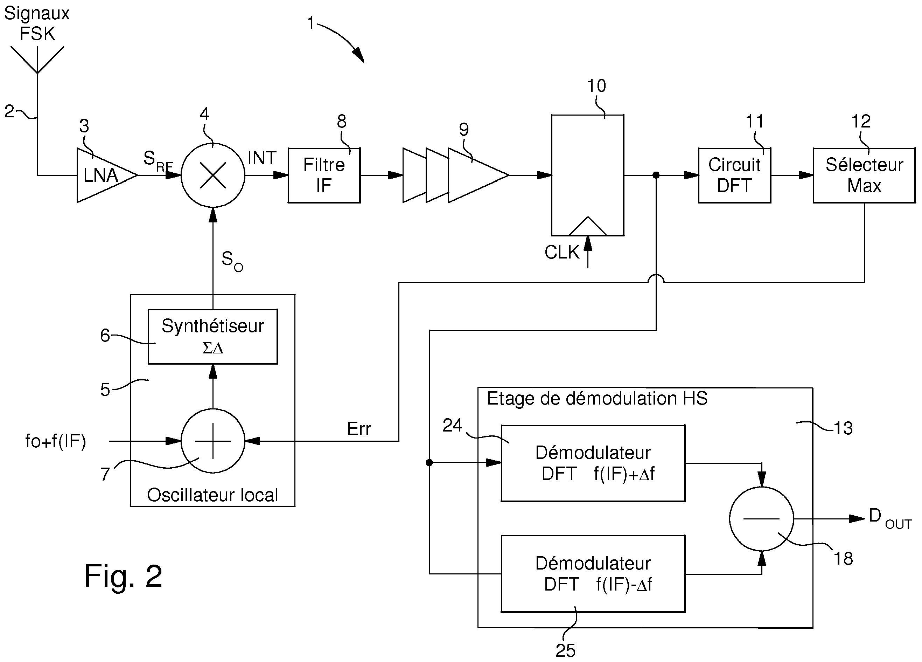

Le récepteur de signaux radiofréquences FSK à haute sensibilité 1 est représenté de manière simplifiée aux figures 1 et 2. Ce récepteur de signaux radiofréquences FSK fonctionne selon une approche asynchrone. Pour pouvoir être en mesure de garantir une haute sensibilité de réception des données, le récepteur est configuré pour capter des signaux radiofréquences FSK, qui sont de préférence à faible débit de données, par exemple de l'ordre de 1 kbits/s. Il est ainsi possible avec le récepteur de signaux radiofréquences à haute sensibilité 1 d'avoir une sensibilité supérieure à 17 dB par rapport à un récepteur de signaux radiofréquences FSK à haut débit de données, par exemple à 100 kbits/s.

Idéalement, le récepteur à haute sensibilité peut opérer avec une modulation FSK où la déviation de fréquence Δf est proche du débit de données Dp, avec par exemple Δf/Dp = ½. Cependant, dans le cas où le débit de données Dp vaut 1 kbits/s, une déviation de fréquence Δf de 500 Hz correspondante nécessite une très grande pureté spectrale des synthétiseurs d'un émetteur et d'un récepteur, donc un très faible bruit de phase. Ceci est nécessaire pour démoduler avec un rapport signal sur bruit satisfaisant. L'utilisation d'un rapport Δf/Dp plus élevé permet de contourner ce problème.

Le récepteur de signaux radiofréquences FSK 1 selon l'invention est donc en mesure de capter avantageusement des signaux radiofréquences FSK à faible débit de données ou commandes. Avec de tels signaux radiofréquences FSK à faible débit, la puissance des signaux captés est généralement concentrée au niveau de la déviation de fréquence de modulation Δf (positive et négative) par rapport à la fréquence porteuse f₀ des signaux. Généralement dans la modulation de fréquence des signaux captés, un état "1" de modulation est défini par l'addition de la fréquence porteuse f₀ et de la déviation de fréquence de modulation Δf, ce qui donne f₀+Δf, alors qu'un état "0" de modulation est défini par la déviation de fréquence de modulation Δf soustraite de la fréquence porteuse f₀, ce qui donne f₀-Δf. Bien entendu, il pourrait être imaginé également que l'état "0" de modulation soit défini comme la fréquence porteuse f₀, même si la modulation de données à f₀+Δf et f₀-Δf est préférée.

Comme représenté aux figures 1 et 2, le récepteur de signaux radiofréquences FSK 1 comprend une antenne 2 de réception de signaux FSK, dont la fréquence porteuse peut être par exemple de l'ordre de 2.4 GHz. Les signaux FSK captés par l'antenne 2 sont amplifiés dans un amplificateur à faible bruit LNA 3. Cet amplificateur à faible bruit LNA 3 peut comprendre également un filtre passe-bande non représenté. Les signaux FSK amplifiés et filtrés S_{RF} sont convertis en fréquence dans un mélangeur 4 par des signaux oscillants S_{O} fournis par un oscillateur local 5, afin de fournir des signaux intermédiaires INT simples ou en quadrature à fréquence intermédiaire f(IF). La fréquence intermédiaire peut être de préférence de l'ordre de 400 kHz, mais il peut également être prévu que cette fréquence intermédiaire soit nulle suite à une conversion directe en bande de base par le mélangeur 4.

Ces signaux intermédiaires INT sont filtrés dans un filtre passe-bande large ou polyphase 8 avant de passer encore par un limiteur amplificateur traditionnel 9. La largeur de bande du filtre 8 peut être fixée par exemple à 600 kHz dans le cas d'une fréquence intermédiaire de l'ordre de 400 kHz. Cette largeur de bande du filtre 8 est fixée pour tenir compte de l'erreur de fréquence des signaux oscillants fournis par l'oscillateur local, ou également des signaux radiofréquences FSK captés. L'erreur de fréquence des signaux oscillants peut être de l'ordre de ±100 kHz, comme les signaux oscillants S_{O} sont générés par un résonateur à quartz bon marché (±20 ppm) non représenté.

Les signaux intermédiaires INT filtrés et amplifiés par le limiteur 9, sont par la suite échantillonnés dans un échantillonneur 10, qui est cadencé par un signal d'horloge CLK. Ce signal d'horloge peut avoir une fréquence par exemple égale à 1.625 MHz. Ce signal d'horloge CLK provient d'une série de diviseurs non représentés, qui sont reliés à un résonateur à quartz de 26 MHz de l'oscillateur local 5. Les signaux intermédiaires sont donc échantillonnés, afin d'accumuler un nombre N de points à traiter dans un circuit de traitement ou contrôle 11. Il peut être prévu de fournir 2048 points à traiter par le circuit de traitement.

Sur la base de ces 2048 points relatifs aux signaux intermédiaires échantillonnés, le circuit de traitement 11 opère une transformée de Fourier discrète (DFT) pour déterminer la fréquence des signaux intermédiaires échantillonnés les plus grands, c'est-à-dire avec la plus grande amplitude au-dessus d'un seuil déterminé. Le résultat de la transformée de Fourier discrète peut être transmis à un sélecteur 12 en sortie du circuit de traitement 11. Ce sélecteur 12 peut comprendre une unité mémoire pour mémoriser la transformée de Fourier discrète opérée. Cependant, la transformée de Fourier discrète suite à une première acquisition peut aussi être mémorisée dans le circuit de traitement 11.

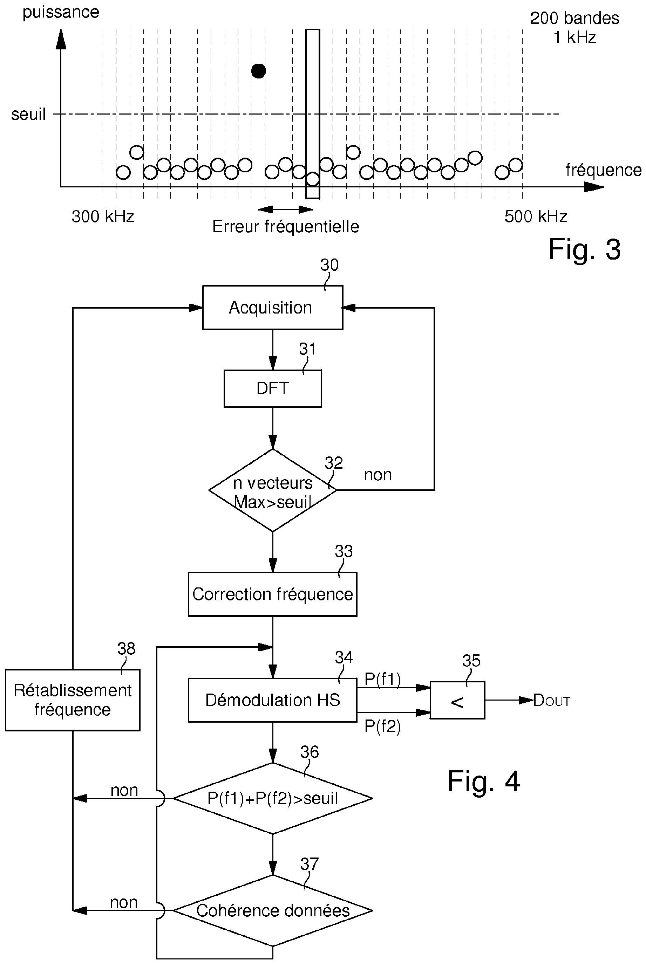

Comme illustré à la figure 3, la transformée de Fourier discrète dans le circuit de traitement 11 est avantageusement opérée sur une bande de fréquences entre 300 kHz et 500 kHz avec 200 bandes à 1 kHz par exemple. Le nombre de bandes peut bien entendu être augmenté en fonction de la résolution fréquentielle souhaitée. Sur cette figure 3, un pic de puissance au-dessus d'un seuil déterminé est représenté. Une erreur de fréquence est constatée par rapport à une fréquence attendue des signaux intermédiaires. Bien évidemment dans le cas d'une modulation de fréquence avec la déviation de fréquence Δf, il devrait être représenté deux pics de puissance au-dessus du seuil déterminé. Avec cette transformée de Fourier discrète, cela permet de rapidement fournir un résultat en comparaison d'une transformée de Fourier rapide (FFT), qui traite les signaux sur toutes les fréquences échantillonnées, dans le cas présent sur 2048 bandes.

Le circuit de contrôle par transformée de Fourier discrète 11 peut être à 1 bit. Cette DFT opère une convolution sur les signaux intermédiaires échantillonnés avec 200 vecteurs sinus et cosinus représentatifs des 200 bandes de fréquence à analyser. Les résultats sont encore mis au carré et additionnés, afin de calculer les 200 vecteurs d'amplitude en puissance correspondants. Seuls les N plus grands vecteurs supérieurs à un seuil paramétrable sont retenus et mémorisés dans le sélecteur 12. Le nombre N de vecteur peut être égal à 4.

Suite à la réception du résultat de la transformée de Fourier discrète des signaux intermédiaires échantillonnés, le sélecteur 12 contrôle l'erreur de fréquence par rapport à la fréquence centrale attendue des signaux intermédiaires en tenant compte de la déviation positive et négative de modulation des données Δf. Un signal de commande Err est ainsi transmis à l'oscillateur local 5, pour lui permettre d'adapter la fréquence des signaux oscillants S_{O}. La correction de la fréquence des signaux oscillants permet donc de recentrer la fréquence des signaux intermédiaires INT fournis en sortie du mélangeur 4. Cette opération d'adaptation de la fréquence des signaux intermédiaires est nécessaire pour pouvoir effectuer une démodulation à haute sensibilité par l'intermédiaire de l'étage de démodulation HS à haute sensibilité 13 décrit ci-après.

Le sélecteur 12, qui est combiné au circuit de contrôle par DFT 11, permet de mettre en fonction un algorithme de recherche à n vecteurs importants tirés du circuit de traitement 11. De préférence, il peut être utilisé un algorithme de recherche à 4 vecteurs, ce qui suffit pour pouvoir sélectionner au moins un vecteur important permettant l'adaptation de la fréquence des signaux oscillants S_{O} de l'oscillateur local 5. L'utilisation de cet algorithme sert principalement à éliminer les signaux parasites perturbateurs, qui ont été captés en plus des signaux radiofréquences FSK. Il peut s'agir par exemple de signaux émis pour la commande de verrouillage des portes d'une voiture à proximité du récepteur.

Comme expliqué ci-après en référence à la figure 4 relative au procédé de mise en action du récepteur, il est effectué une série d'acquisitions des signaux intermédiaires échantillonnés jusqu'au temps tₙ et de transformées de Fourier discrètes correspondantes. Le sélecteur 12 prend ainsi en compte les deux résultats de la transformée de Fourier discrète, qui ne sont pas directement successifs dans le temps à tₙ₋₂ et tₙ. Un intervalle d'acquisition et de traitement par DFT supplémentaire est encore prévu entre les deux résultats à contrôler. Finalement, les deux résultats de transformée de Fourier discrète sont comparés, afin d'éliminer les signaux parasites perturbateurs.

Les "bons" signaux radiofréquences FSK, captés par le récepteur, sont repérés dans le domaine fréquentiel par des pics d'amplitude ou puissance à des fréquences différentes au-dessus d'un seuil déterminé. Au moins deux pics d'amplitude représentant les fréquences de modulation dans les signaux intermédiaires sont normalement prévus au-dessus d'un seuil déterminé, si lors des phases d'acquisition, les données alternent entre l'état "1" et l'état "0". Suite aux deux transformées de Fourier discrètes à tₙ₋₂ et tₙ, ces pics d'amplitude apparaissent espacés d'un intervalle de fréquence bien précis, ce qui n'est en principe qu'exceptionnellement le cas pour des signaux parasites perturbateurs.

Cependant il peut être prévu qu'un émetteur transmette une série de "1" pour une première acquisition au temps tₙ₋₂ par le récepteur, ce qui ne donne qu'un pic d'amplitude détecté (f(IF)+Δf) pour des bons signaux captés. Par la suite, l'émetteur peut transmettre une série de "0" pour une seconde acquisition au temps tₙ par le récepteur, ce qui ne donne qu'un autre pic d'amplitude détecté (f(IF)-Δf). Dans ces conditions, la différence de fréquence entre les deux pics des bons signaux est précisément égale au double de la déviation de fréquence FSK de l'émetteur. Ceci permet de corriger la fréquence de l'oscillateur local avec une erreur absolue. Par contre, les pics d'amplitude des signaux parasites échantillonnés n'apparaissent en principe qu'une seule fois à une même fréquence suite aux deux transformées de Fourier discrètes, et l'écart de fréquence entre eux ne correspond pas à la déviation de fréquence de modulation. De ce fait, il est facile d'éliminer ces signaux parasites dans le sélecteur 12.

L'oscillateur local 5 comprend principalement un synthétiseur de fréquence sigma-delta 6 bien connu, qui comprend un résonateur à quartz à 26 MHz par exemple, non représenté, pour fournir un signal de référence dans la boucle à verrouillage de phase du synthétiseur. Les signaux oscillants S_{O} sont fournis en sortie d'un oscillateur commandé en tension VCO bien connu. Le synthétiseur de fréquence 6 est commandé également par un signal de programmation de fréquence. Ce signal de programmation provient d'un additionneur 7, qui effectue l'addition d'un signal à fréquence déterminée de base f₀+f(IF), qui est utilisé à chaque initialisation du récepteur, et d'un signal de commande Err relatif à l'erreur de fréquence, qui est déterminée par la combinaison du circuit de traitement 11 et du sélecteur 12.

Une fois que la fréquence des signaux intermédiaires INT a été adaptée au moyen de l'adaptation de la fréquence des signaux oscillants S_{O} de l'oscillateur local 5, il peut être effectué une démodulation des données ou commandes à haute sensibilité. Cette démodulation des données ou commandes est effectuée par l'étage de démodulation HS à haute sensibilité 13.

Dans la première forme d'exécution présentée à la figure 1, l'étage de démodulation HS 13 permet d'effectuer une démodulation à haute sensibilité une fois que la fréquence des signaux intermédiaires a été bien adaptée. Cet étage de démodulation HS 13 comprend un premier filtre numérique à bande étroite 14 pour filtrer les signaux intermédiaires échantillonnés ayant une déviation de fréquence positive f(IF)+Δf, et un second filtre numérique à bande étroite 15 pour filtrer les signaux intermédiaires échantillonnés ayant une déviation de fréquence nulle ou négative f(IF)-Δf. La largeur de bande de chaque filtre numérique peut être de l'ordre de 2 kHz. Les signaux filtrés en sortie du premier filtre numérique 14 passent par un premier détecteur d'énergie 16, alors que les signaux filtrés en sortie du second filtre numérique 15 passent par un second détecteur d'énergie 17. Un soustracteur 18 est également prévu en sortie des détecteurs 16, 17, pour que les signaux en sortie du second détecteur d'énergie 17 soient soustraits des signaux en sortie du premier détecteur d'énergie 16. Des signaux de données ou commandes D_{OUT} sont fournis en sortie du soustracteur avec une séquence composée de 1 et de -1.

Dans la seconde forme d'exécution présentée à la figure 2, l'étage de démodulation HS 13 à haute sensibilité comprend un premier démodulateur DFT 24 pour démoduler les signaux intermédiaires échantillonnés ayant une déviation de fréquence positive f(IF)+Δf, et un second démodulateur DFT 25 pour démoduler les signaux intermédiaires échantillonnés ayant une déviation de fréquence nulle ou négative f(IF)-Δf. Les deux démodulateurs DFT effectuent une transformée de Fourier discrète glissante bien connue avec un nombre de bandes réduit à l'unité dans la gamme de fréquences de 2 kHz par exemple. Les signaux en sortie du second démodulateur DFT 25 sont soustraits dans un soustracteur 18 aux signaux en sortie du premier démodulateur DFT 24, afin de fournir des signaux de données ou commandes D_{OUT}.

La figure 4 représente un organigramme du procédé de mise en action du récepteur de signaux radiofréquences FSK à haute sensibilité selon l'invention. Une première phase du procédé consiste à contrôler la fréquence des signaux intermédiaires suite à la conversion de fréquence dans le mélangeur des signaux radiofréquences FSK par les signaux oscillants. Suite à ce contrôle, une correction de fréquence peut être imposée à l'oscillateur local pour recentrer la fréquence des signaux intermédiaires avant d'effectuer une démodulation des données à haute sensibilité.

Une première acquisition à l'étape 30 des signaux radiofréquences FSK captés par le récepteur jusqu'à la fourniture des signaux intermédiaires échantillonnés sur 2048 points est tout d'abord effectuée sur une durée de l'ordre de 1.26 ms. La durée d'acquisition peut bien entendu être fixée plus grande pour permettre une résolution de centrage plus fine. Une première transformée de Fourier discrète à l'étape 31 est réalisée sur les signaux intermédiaires échantillonnés pour fournir un premier résultat de la transformée normalement au sélecteur, qui mémorise ce premier résultat au temps tₙ₋₂. La durée de mise en fonction de cette transformée de Fourier discrète peut être d'environ 2.52 ms.

Selon une variante de fonctionnement du récepteur, qui tient compte d'éventuels signaux parasites captés au même titre que de bons signaux radiofréquences FSK, le processus d'acquisition et de traitement par DFT est répété en boucle suite à un contrôle à l'étape 32. Les premier et second résultats de deux transformées de Fourier discrètes, avec un intervalle d'acquisition et de traitement par DFT entre les deux résultats, sont contrôlés dans le sélecteur à l'étape 32. Pour déterminer les bons signaux, il est effectué une comparaison des pics d'amplitude maximaux au-dessus d'un seuil déterminé suite aux deux transformées de Fourier discrètes. Il est également utilisé pour cela dans le sélecteur un algorithme de recherche à n vecteurs, de préférence à 4 vecteurs importants. Ainsi les signaux parasites peuvent être éliminés, afin de permettre au sélecteur de fournir un signal de commande à l'oscillateur local à l'étape 33 pour la correction de la fréquence des signaux oscillants. Si aucun pic d'amplitude en dessus du seuil déterminé n'est détecté, le processus d'acquisition et de traitement par DFT est répété aux étapes 30 à 32.

Une fois que la fréquence des signaux oscillants de l'oscillateur local a pu être corrigée à l'étape 33, il est possible à l'étape 34 d'effectuer une démodulation des données dans l'étage de démodulation à haute sensibilité. Dans cet étage de démodulation, il est par exemple filtré les signaux intermédiaires échantillonnés à la fréquence f(IF)+Δf pour fournir des premiers signaux de puissance P(f1) au soustracteur, et les signaux intermédiaires échantillonnés à la fréquence f(IF)-Δf pour fournir des seconds signaux de puissance P(f2) au soustracteur. Ainsi une soustraction des signaux de puissance est opérée à l'étape 35 pour fournir des signaux de données D_{OUT}.

Il est encore possible suite à l'étape 34 de démodulation HS d'effectuer un contrôle sur les signaux de puissance P(f1) et P(f2) à l'étape 36. Dans le cas où l'addition de ces deux signaux de puissance P(f1) et P(f2) est supérieure à un seuil défini, il est déterminé la cohérence des données reçues dans les signaux radiofréquences FSK à l'étape 37. Si par contre l'addition des signaux de puissance n'est pas supérieure audit seuil défini, il est opéré un rétablissement de la fréquence initiale des signaux oscillants de l'oscillateur local à l'étape 38 avant d'effectuer une nouvelle acquisition de signaux radiofréquences FSK à l'étape 30.

La cohérence des données examinée à l'étape 37, concerne essentiellement la fiabilité des données modulées ou non, captées par le récepteur de signaux radiofréquences FSK, afin d'éliminer tout bruit parasite. Si la cohérence des données est confirmée, il est à nouveau effectué une démodulation à haute sensibilité à l'étape 34. Par contre, s'il n'y pas de cohérence des données, il est également effectué un rétablissement de la fréquence initiale des signaux oscillants de l'oscillateur local à l'étape 38 avant d'effectuer une nouvelle acquisition de signaux radiofréquences FSK à l'étape 30.

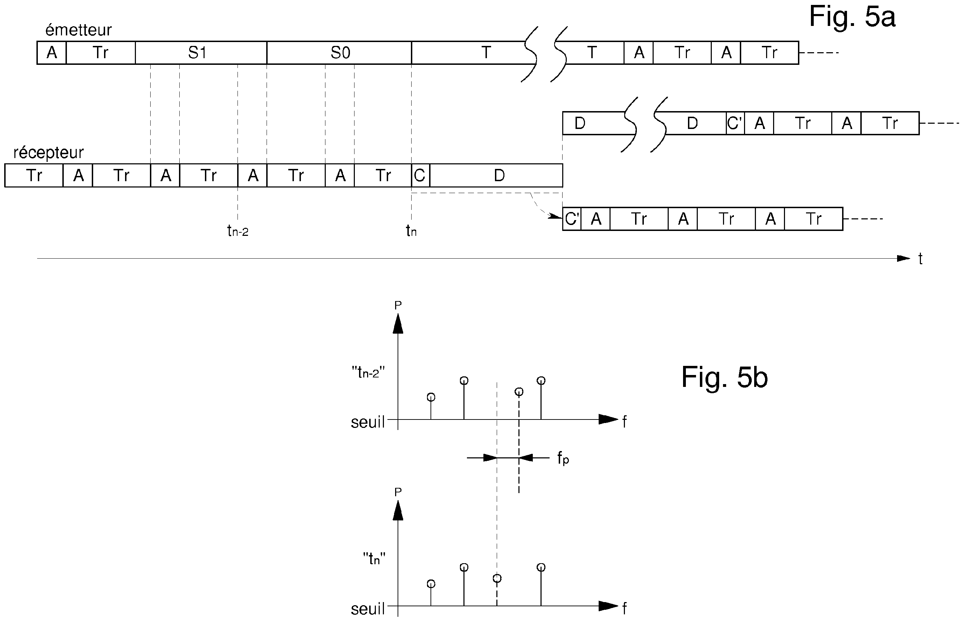

Pour mieux visualiser dans le temps les différentes étapes du procédé de mise en action du récepteur de signaux radiofréquences FSK, on peut se référer aux figures 5a et 5b.

A la figure 5a, il est représenté un graphique temporel simplifié des signaux provenant d'un émetteur et des signaux captés par le récepteur de signaux radiofréquences FSK selon l'invention. A la figure 5b, il est représenté un graphique simplifié de la puissance des signaux intermédiaires échantillonnés dans le domaine fréquentiel suite à au moins deux transformées de Fourier discrètes espacées dans le temps.

Au départ une succession de phases d'acquisition défini par A et de transformée de Fourier discrète définie par Tr, par exemple des signaux intermédiaires échantillonnés est effectuée dans l'émetteur et le récepteur. Le microprocesseur de l'émetteur commande la transmission par une antenne de l'émetteur de signaux radiofréquences FSK. L'émetteur transmet tout d'abord une séquence de 10 bits à l'état "1" ou possédant une déviation de fréquence bien déterminée et connue du récepteur, définie par S1 à faible débit par exemple de l'ordre de 1.5 kbits/s. Cela correspond à une durée de l'ordre de 6.66 ms. Pendant la durée de transmission de cette séquence de "1", le récepteur effectue une première acquisition effective d'une partie de cette séquence, normalement pendant une durée de l'ordre de 1.26 ms ou supérieure. Cette acquisition au niveau des signaux intermédiaires échantillonnés doit correspondre à des signaux à une fréquence de f(IF)+Δf. Une première transformée de Fourier discrète de ces signaux intermédiaires échantillonnés est effectuée au terme d'une durée de l'ordre de 2.52 ms au temps tₙ₋₂. A cet instant, le résultat de cette première transformation de Fourier discrète est mémorisé dans le sélecteur.

A la suite de cette séquence de "1" transmise par l'émetteur, une seconde séquence de 10 bits à l'état "0" ou possédant une déviation de fréquence bien déterminée et connue du récepteur, définie par S0 de durée égale à 6.66 ms, est transmise par l'émetteur. Une phase intermédiaire d'acquisition et de transformée de Fourier discrète dans le récepteur, suit la première transformée de Fourier discrète. Après l'intervalle de la phase intermédiaire d'acquisition et de traitement par DFT, une seconde acquisition effective d'une partie de cette seconde séquence S0 débute. Cette seconde acquisition au niveau des signaux intermédiaires échantillonnés doit correspondre à des signaux à une fréquence de f(IF)-Δf ou f(IF). Une seconde transformée de Fourier discrète de ces signaux intermédiaires échantillonnés est effectuée et mémorisée dans le sélecteur du récepteur. Au terme de cette seconde séquence de signalisation, l'émetteur opère une transmission effective des données définie par T. Au terme de cette transmission de données, l'émetteur revient dans une phase par exemple de réception où il y a une succession de phases d'acquisition et de transformée de Fourier discrète, comme pour le récepteur.

De manière continue, le sélecteur met en fonction un algorithme de recherche à n vecteurs et compare les deux résultats des transformées de Fourier discrètes mémorisés et espacés en plus d'un intervalle temporel d'une phase intermédiaire d'acquisition et de traitement par DFT. Parmi les n plus puissants vecteurs détectés aux instants tₙ₋₂ et tₙ, l'algorithme cherche à repérer deux candidats séparés de la double déviation de fréquence Δf correspondant à la phase de signalisation. Ceci permet de diminuer fortement la probabilité de centrage erroné causé par des signaux parasites perturbateurs espacés d'une fréquence fₚ, et de sélectionner les pics d'amplitude au-dessus du seuil déterminé provenant de bons signaux radiofréquences FSK captés. Sur la base des pics d'amplitude sélectionnés, le sélecteur transmet un signal de commande à l'oscillateur local pour corriger la fréquence des signaux oscillants définie par C.

Dès que la fréquence des signaux oscillants est corrigée, une opération de démodulation à haute sensibilité définie par D, peut débuter comme représenté par les signaux disposés sur la ligne supérieure des signaux du récepteur. Au terme de la période de démodulation à haute sensibilité, la fréquence des signaux oscillants est rétablie comme initialement, ce qui est défini par C'. Une nouvelle succession de phases d'acquisition et de transformée de Fourier discrète s'opère dans le récepteur de signaux radiofréquences FSK.

Par contre dans le récepteur, après la phase de correction de la fréquence des signaux oscillants de l'oscillateur local, il est effectué une temporisation sur la détection d'un préambule des signaux captés. Si aucun préambule correct n'est détecté, après un certain temps comme montré sur les signaux de la ligne inférieure des signaux du récepteur, il est effectué un rétablissement de la fréquence initiale des signaux oscillants avant qu'une nouvelle succession de phases d'acquisition et de transformée de Fourier discrète s'opère dans le récepteur de signaux radiofréquences FSK.

A partir de la description qui vient d'être faite, plusieurs variantes du récepteur de signaux radiofréquences FSK à haute sensibilité peuvent être conçues par l'homme du métier sans sortir du cadre de l'invention définie par les revendications. Dans un même ordre d'idée, le récepteur aurait pu être configuré également de manière à permettre une transmission de signaux de données modulées en tant que quittance de réception par une même antenne dans un mode à faible débit. Il peut être effectué également plusieurs acquisitions et transformées de Fourier discrètes avant d'effectuer une correction de la fréquence des signaux oscillants de l'oscillateur local. Il peut encore être prévu que l'erreur de fréquence détectée entre l'émetteur et le récepteur soit utilisée à plus haut niveau par un système de communication, par exemple pour faciliter la recherche en présence de forts perturbateurs ou dans un but de synchronisation. La transformée de Fourier discrète peut être effectuée sur deux bandes de fréquences et selon un traitement à plusieurs bits. En lieu et place d'un synthétiseur sigma delta dans l'oscillateur local, il peut aussi être utilisé un synthétiseur N fractionnel ou DDS.

## Revendications

1. Récepteur (1) de signaux radiofréquences FSK à faible débit et à haute sensibilité, ledit récepteur comprenant :
- une antenne (2) de réception de signaux radiofréquences FSK,
- au moins un amplificateur à faible bruit (3) pour amplifier et filtrer les signaux captés par l'antenne,
- un oscillateur local (5) à résonateur à quartz pour fournir des signaux oscillants (S_{O}),
- au moins un bloc mélangeur (4) pour mélanger les signaux captés filtrés et amplifiés avec les signaux oscillants fournis par l'oscillateur local, afin de produire des signaux intermédiaires (INT), dont la fréquence est égale à la différence entre la fréquence des signaux haute fréquence et une fréquence porteuse des signaux captés,
- un filtre à large bande ou polyphase (8) pour filtrer les signaux intermédiaires, et
- un échantillonneur (10) des signaux intermédiaires pour fournir des signaux intermédiaires échantillonnés à un étage de démodulation (13) à haute sensibilité, qui fournit des signaux de données (D_{OUT}),
**caractérisé en ce que** le récepteur comprend également un circuit de traitement (11), qui est en mesure d'effectuer au moins une transformée de Fourier discrète sur la base des signaux intermédiaires échantillonnés, afin de déterminer l'écart entre la fréquence d'un pic d'amplitude dans le domaine fréquentiel des signaux au-dessus d'un seuil déterminé et la fréquence attendue dans les signaux intermédiaires (INT), et un sélecteur (12) en sortie du circuit de traitement (11), qui reçoit un ou plusieurs résultats par transformée de Fourier discrète des signaux intermédiaires échantillonnés, ledit sélecteur (12) étant agencé pour contrôler l'erreur de fréquence par rapport à la fréquence attendue des signaux intermédiaires en tenant compte de la déviation positive et/ou négative de modulation des données dans les signaux intermédiaires échantillonnés, et pour fournir un signal de commande (Err) à l'oscillateur local (5) pour corriger la fréquence des signaux oscillants (S_{O}) de l'oscillateur local en fonction de l'erreur de fréquence déterminée, et **en ce que** l'étage de démodulation (13) à haute sensibilité est en mesure de démoduler les données des signaux intermédiaires échantillonnés quand la fréquence des signaux oscillants est corrigée.

2. Récepteur (1) selon la revendication 1, **caractérisé en ce que** le sélecteur (12) comprend une unité mémoire pour mémoriser les résultats d'une ou plusieurs transformées de Fourier discrètes des signaux intermédiaires échantillonnés, qui sont effectuées dans le circuit de traitement (11).

3. Récepteur (1) selon la revendication 2, **caractérisé en ce que** le sélecteur (12) est agencé pour mettre en fonction un algorithme de recherche à n vecteurs importants sur la base des résultats mémorisés des transformées de Fourier discrètes effectuées dans le circuit de traitement (11), le sélecteur étant agencé pour comparer des pics d'amplitude au-dessus d'un seuil déterminé des résultats mémorisés de manière à détecter tout pic parasite de signaux captés perturbateurs, et agencé pour sélectionner un ou plusieurs pics d'amplitude au-dessus du seuil déterminé de bons signaux radiofréquences FSK captés pour déterminer l'erreur de fréquence par rapport à la fréquence attendue des signaux intermédiaires, et le sélecteur étant également agencé pour fournir un signal de commande (Err) à l'oscillateur local (5) pour la correction de fréquence des signaux oscillants (S_{O}).

4. Récepteur (1) selon l'une des revendications 1 à 3, **caractérisé en ce que** l'oscillateur local (5) comprend un synthétiseur de fréquence du type sigma-delta (6), qui comprend un résonateur à quartz pour la fourniture d'un signal de référence dans une boucle à verrouillage de phase et fournir des signaux oscillants (S_{O}) en sortie d'un oscillateur commandé en tension, et **en ce que** l'oscillateur local (5) comprend également un additionneur (7) pour additionner un signal à fréquence déterminée de base (f₀+f(IF)) pour initialiser la fréquence des signaux oscillants, et un signal de commande (Err) fourni par le sélecteur (12) dépendant de l'erreur de fréquence déterminée dans le sélecteur, la sortie de l'additionneur étant destinée à commander le synthétiseur de fréquence pour adapter la fréquence des signaux oscillants.

5. Récepteur (1) selon l'une des revendications précédentes, **caractérisé en ce que** l'étage de démodulation à haute sensibilité (13) comprend un premier filtre numérique à bande étroite (14) pour filtrer les signaux intermédiaires échantillonnés ayant une déviation de fréquence positive (f(IF)+Δf), et un second filtre numérique à bande étroite (15) pour filtrer les signaux intermédiaires échantillonnés ayant une déviation de fréquence nulle ou négative (f(IF)-Δf), **en ce que** les signaux fournis par le premier filtre numérique (14) passent par un premier détecteur d'énergie (16), **en ce que** les signaux fournis par le second filtre numérique (15) passent par un second détecteur d'énergie (17), et **en ce qu'**un soustracteur (18) de l'étage de démodulation est agencé pour soustraire les signaux en sortie du second détecteur d'énergie (17) aux signaux en sortie du premier détecteur d'énergie (16) pour fournir des signaux de données (D_{OUT}).

6. Récepteur (1) selon la revendication 5, **caractérisé en ce que** chaque filtre numérique à bande étroite est configuré pour avoir une largeur de bande de l'ordre de 2 kHz, pour filtrer des signaux intermédiaires échantillonnés provenant de signaux radiofréquences FSK à faible débit captés par le récepteur.

7. Récepteur (1) selon l'une des revendications 1 à 4, **caractérisé en ce que** l'étage de démodulation à haute sensibilité (13) comprend un premier démodulateur DFT (24) pour démoduler les signaux intermédiaires échantillonnés ayant une déviation de fréquence positive (f(IF)+Δf), et un second démodulateur DFT (25) pour démoduler les signaux intermédiaires échantillonnés ayant une déviation de fréquence nulle ou négative (f(IF)-Δf), **en ce que** les deux démodulateurs DFT sont agencés pour effectuer une transformée de Fourier discrète glissante des signaux intermédiaires échantillonnés avec un nombre de bandes déterminées, de préférence réduites à l'unité, dans une gamme étroite de fréquences, et **en ce qu'**un soustracteur (18) de l'étage de démodulation est agencé pour soustraire les signaux en sortie du second démodulateur DFT (25) aux signaux en sortie du premier démodulateur DFT (24) pour fournir des signaux de données (D_{OUT}).

8. Récepteur (1) selon la revendication 7, **caractérisé en ce que** la gamme étroite de fréquences des deux démodulateurs est de l'ordre de 2 kHz, pour démoduler des signaux intermédiaires échantillonnés provenant de signaux radiofréquences FSK à faible débit captés par le récepteur.

9. Procédé de mise en action du récepteur de signaux radiofréquences FSK à faible débit et à haute sensibilité selon l'une des revendications précédentes, **caractérisé en ce que** le procédé comprend une première série d'étapes avec une succession dans le temps de phases d'acquisition et de transformée de Fourier discrète de signaux intermédiaires échantillonnés, la première série d'étapes consistant à :
a) effectuer une première acquisition des signaux radiofréquences FSK captés par le récepteur à convertir en fréquence dans le bloc mélangeur (4) par des signaux oscillants (S_{O}) de l'oscillateur local (5), et à échantillonner les signaux intermédiaires (INT) en sortie du bloc mélangeur, afin de produire des premiers signaux intermédiaires échantillonnés,
b) effectuer une première transformée de Fourier discrète dans le circuit de traitement (11) des premiers signaux intermédiaires échantillonnés,
c) effectuer une seconde acquisition des signaux radiofréquences FSK captés par le récepteur à convertir en fréquence dans le bloc mélangeur (4) par des signaux oscillants (S_{O}) de l'oscillateur local (5), et à échantillonner les signaux intermédiaires (INT) en sortie du bloc mélangeur, afin de produire des seconds signaux intermédiaires échantillonnés,
d) effectuer une seconde transformée de Fourier discrète dans le circuit de traitement (11) des seconds signaux intermédiaires échantillonnés, et
**en ce que** le procédé comprend une seconde série d'étapes à la suite de la première série d'étapes consistant à :
e) contrôler les résultats des deux transformées de Fourier discrètes dans le sélecteur (12), afin de comparer les pics d'amplitude détectés au-dessus du seuil déterminé suite aux deux transformées de Fourier discrètes, de manière à éliminer les pics d'amplitude de signaux parasites et sélectionner les pics d'amplitude de bons signaux radiofréquences FSK captés, et
f) corriger la fréquence des signaux oscillants (S_{O}) de l'oscillateur local (5) sur la base de la différence entre la fréquence d'un pic d'amplitude sélectionné et une fréquence attendue des signaux intermédiaires en tenant compte de la déviation positive et/ou négative de modulation des données dans les signaux intermédiaires échantillonnés.

10. Procédé selon la revendication 9, **caractérisé en ce que** les résultats des première et seconde transformées de Fourier discrètes sont mémorisés dans le sélecteur (12), qui détermine les pics d'amplitude importants au-dessus du seuil déterminé, afin de fournir un signal de commande (Err) à l'oscillateur local pour corriger la fréquence des signaux oscillants (S_{O}) en fonction de la différence entre la fréquence d'au moins un pic d'amplitude important détecté et une fréquence attendue des signaux intermédiaires.

11. Procédé selon la revendication 9, **caractérisé en ce que** les signaux intermédiaires sont échantillonnés dans l'échantillonneur pour fournir des signaux intermédiaires échantillonnés au circuit de traitement sur 2048 points.

12. Procédé selon la revendication 9, **caractérisé en ce que** la première phase d'acquisition et de transformée de Fourier discrète des étapes a) et b) est décalée dans le temps de la seconde phase d'acquisition et de transformée de Fourier discrète des étapes c) et d) par au moins une phase intermédiaire d'acquisition et de transformée de Fourier discrète de signaux intermédiaires échantillonnés.

13. Procédé selon la revendication 9, **caractérisé en ce que** le sélecteur (12) met en fonction un algorithme de recherche à n vecteurs, de préférence à 4 vecteurs importants, pour sélectionner les pics d'amplitude au-dessus du seuil déterminé autres que les pics d'amplitude générés par des signaux parasites perturbateurs.

14. Procédé selon la revendication 9, **caractérisé en ce que** chaque transformée de Fourier discrète est effectuée dans le circuit de traitement (11) sur une largeur de bande de fréquences centrée sur la fréquence attendue des signaux intermédiaires, et inférieure à 400 kHz, de préférence égale à 200 kHz avec 200 bandes de 1 kHz.

## Patentansprüche

1. Empfänger (1) für FSK-Hochfrequenzsignale mit geringem Durchsatz und hoher Empfindlichkeit, wobei der Empfänger umfasst:
- eine Empfangsantenne (2) für FSK-Hochfrequenzsignale,
- mindestens einen rauscharmen Empfänger (3), um die von der Antenne empfangenen Signale zu verstärken und zu filtern,
- einen Hilfsoszillator (5) mit Quarzresonator, um Oszillationssignale (So) zu liefern,
- mindestens einen Mischerblock (4), um die gefilterten und verstärkten empfangenen Signale mit den Oszillationssignalen, die von dem Hilfsoszillator geliefert werden, zu mischen, um Zwischensignale (INT) zu erzeugen, deren Frequenz gleich der Differenz zwischen der Frequenz der Hochfrequenzsignale und einer Trägerfrequenz der empfangenen Signale ist,
- ein Breitband- oder Polyphasenfilter (8), um die Zwischensignale zu filtern, und
- eine Abtastschaltung (10) für Zwischensignale, um abgetastete Zwischensignale an eine Demodulationsstufe (13) mit hoher Empfindlichkeit zu liefern, die Datensignale (D_{OUT}) liefert,
**dadurch gekennzeichnet, dass** der Empfänger außerdem eine Verarbeitungsschaltung (11), die in der Lage ist, mindestens eine diskrete Fourier-Transformation auf der Grundlage der abgetasteten Zwischensignale auszuführen, um den Abstand zwischen der Frequenz einer Amplitudenspitze im Frequenzbereich der Signale oberhalb eines gegebenen Schwellenwerts und der erwarteten Frequenz in den Zwischensignalen (INT) zu bestimmen, und eine Auswahleinrichtung (12) am Ausgang der Verarbeitungsschaltung (11) umfasst, die ein oder mehrere Ergebnisse der diskreten Fourier-Transformation der abgetasteten Zwischensignale empfängt, wobei die Auswahleinrichtung (12) dafür ausgelegt ist, den Frequenzfehler in Bezug auf die erwartete Frequenz der Zwischensignale unter Berücksichtigung der positiven und/oder negativen Abweichung der Modulation der Daten in den abgetasteten Zwischensignalen zu steuern und um ein Steuersignal (Err) an den Hilfsoszillator (5) zu liefern, um die Frequenz der Oszillationssignale (So) des Hilfsoszillators als Funktion des bestimmten Frequenzfehlers zu korrigieren, und dass die Demodulationsstufe (13) mit hoher Empfindlichkeit in der Lage ist, die Daten der abgetasteten Zwischensignale zu demodulieren, wenn die Frequenz der Oszillationssignale korrigiert ist.

2. Empfänger (1) nach Anspruch 1, **dadurch gekennzeichnet, dass** die Auswahleinrichtung (12) eine Speichereinheit umfasst, um die Ergebnisse einer oder mehrerer diskreter Fourier-Transformationen der abgetasteten Zwischensignale, die in der Verarbeitungsschaltung (11) ausgeführt werden, zu speichern.

3. Empfänger (1) nach Anspruch 2, **dadurch gekennzeichnet, dass** die Auswahleinrichtung (12) dafür ausgelegt ist, einen Algorithmus zum Suchen nach n relevanten Vektoren auf der Grundlage der gespeicherten Ergebnisse der diskreten Fourier-Transformationen, die in der Verarbeitungsschaltung (11) ausgeführt werden, zu betreiben, wobei die Auswahleinrichtung dafür ausgelegt ist, die Amplitudenspitzen oberhalb eines bestimmten Schwellenwerts der gespeicherten Ergebnisse zu vergleichen, derart, dass jede parasitäre Spitze empfangener Störsignale detektiert wird, und dafür ausgelegt ist, eine oder mehrere Amplitudenspitzen oberhalb des bestimmten Schwellenwerts empfangener guter FSK-Hochfrequenzsignale auszuwählen, um den Frequenzfehler in Bezug auf die erwartete Frequenz der Zwischensignale zu bestimmen, wobei die Auswahleinrichtung außerdem dafür ausgelegt ist, ein Steuersignal (Err) an den Hilfsoszillator (5) zu liefern, um die Frequenz der Oszillationssignale (So) zu korrigieren.

4. Empfänger (1) nach einem der Ansprüche 1 bis 3, **dadurch gekennzeichnet, dass** der Hilfsoszillator (5) einen Frequenzsynthetisierer des Sigma-Delta-Typs (6) umfasst, der seinerseits einen Quarzresonator enthält, um ein Referenzsignal an eine Phasenverriegelungsschleife zu liefern und um am Ausgang eines spannungsgesteuerten Oszillators Oszillationssignale (So) zu liefern, und dass der Hilfsoszillator (5) außerdem einen Addierer (7) umfasst, um ein bestimmtes Grundfrequenzsignal (f₀ + f(IF)) zum Initialisieren der Frequenz der Oszillationssignale und ein von der Auswahleinrichtung (12) geliefertes Steuersignal (Err), das von dem bestimmten Frequenzfehler in der Auswahleinrichtung abhängt, zu addieren, wobei der Ausgang des Addierers dazu bestimmt ist, den Frequenzsynthetisierer zu steuern, um die Frequenz der Oszillationssignale anzupassen.

5. Empfänger (1) nach einem der vorhergehenden Ansprüche, **dadurch gekennzeichnet, dass** die Demodulationsstufe (13) mit hoher Empfindlichkeit ein erstes digitales Schmalband-Filter (14), um die abgetasteten Zwischensignale zu filtern, die eine positive Frequenzabweichung (f(IF) + Δf) besitzen, und ein zweites digitales Breitband-Filter (15) umfasst, um die abgetasteten Zwischensignale zu filtern, die eine negative oder Null-Frequenzabweichung (f(IF) - Δf) besitzen, dass die von dem ersten digitalen Filter (14) gelieferten Signale durch einen ersten Energiedetektor (16) laufen, dass die von dem zweiten digitalen Filter (15) gelieferten Signale durch einen zweiten Energiedetektor (17) laufen und dass ein Subtrahierer (18) der Demodulationsstufe dafür ausgelegt ist, die Signale am Ausgang des zweiten Energiedetektors (17) von den Signalen am Ausgang des ersten Energiedetektors (16) zu subtrahieren, um Datensignale (D_{OUT}) zu liefern.

6. Empfänger (1) nach Anspruch 5, **dadurch gekennzeichnet, dass** jedes digitale Schmalband-Filter so konfiguriert ist, dass es eine Bandbreite in der Größenordnung von 2 kHz besitzt, um abgetastete Zwischensignale zu filtern, die von FSK-Hochfrequenzsignalen mit geringem Durchsatz, die von dem Empfänger aufgefangen werden, stammen.

7. Empfänger (1) nach einem der Ansprüche 1 bis 4, **dadurch gekennzeichnet, dass** jede Demodulationsstufe (13) mit hoher Empfindlichkeit einen ersten DFT-Demodulator (24), um die abgetasteten Zwischensignale zu demodulieren, die eine positive Frequenzabweichung (f(IF) + Δf) besitzen, und einen zweiten DFT-Demodulator (25), um die abgetasteten Zwischensignale zu demodulieren, die eine negative oder Null-Frequenzabweichung (f(IF) - Δf) besitzen, umfasst, dass die beiden DFT-Demodulatoren dafür ausgelegt sind, eine gleitende diskrete Fourier-Transformation der abgetasteten Zwischensignale mit einer Anzahl bestimmter Bänder, die vorzugsweise auf eins reduziert sind, in einem schmalen Frequenzbereich auszuführen, und dass ein Subtrahierer (18) der Demodulationsstufe dafür ausgelegt ist, die Signale am Ausgang des zweiten DFT-Demodulators (25) von den Signalen am Ausgang des ersten DFT-Demodulators (24) zu subtrahieren, um Datensignale (D_{OUT}) zu liefern.

8. Empfänger (1) nach Anspruch 7, **dadurch gekennzeichnet, dass** der schmale Frequenzbereich der beiden Demodulatoren in der Größenordnung von 2 kHz liegt, um die abgetasteten Zwischensignale zu demodulieren, die von FSK-Hochfrequenzsignalen mit geringem Durchsatz, die von dem Empfänger aufgefangen werden, stammen.

9. Verfahren zum Betreiben des FSK-Hochfrequenzsignalempfängers mit geringem Durchsatz und hoher Empfindlichkeit nach einem der vorhergehenden Ansprüche, **dadurch gekennzeichnet, dass** das Verfahren eine erste Reihe von Schritten mit einer zeitlichen Abfolge von Phasen der Erfassung und der diskreten Fourier-Transformation von abgetasteten Zwischensignalen umfasst, wobei die erste Reihe von Schritten Folgendes umfasst:
a) Ausführen einer ersten Erfassung von FSK-Hochfrequenzsignalen, die von dem Empfänger empfangen werden, deren Frequenz in dem Mischerblock (4) durch Oszillationssignale (So) des Hilfsoszillators (5) umgesetzt werden soll, und um die Zwischensignale (INT) am Ausgang des Mischerblocks abzutasten, um erste abgetastete Zwischensignale zu erzeugen,
b) Ausführen einer ersten diskreten Fourier-Transformation der ersten abgetasteten Zwischensignale in der Verarbeitungsschaltung (11),
c) Ausführen einer zweiten Erfassung von FSK-Hochfrequenzsignalen, die von dem Empfänger empfangen werden, deren Frequenz in dem Mischerblock (4) durch Oszillationssignale (So) des Hilfsoszillators (5) umgesetzt werden soll, und um die Zwischensignale (INT) am Ausgang des Mischerblocks abzutasten, um zweite abgetastete Zwischensignale zu erzeugen, und
d) Ausführen einer zweiten diskreten Fourier-Transformation der zweiten abgetasteten Zwischensignalen in der Verarbeitungsschaltung (11) und dadurch,
dass das Verfahren nach der ersten Reihe von Schritten eine zweite Reihe von Schritten umfasst, die Folgendes umfassen:
e) Steuern der Ergebnisse der zwei diskreten Fourier-Transformationen in der Auswahleinrichtung (12), um die detektierten Amplitudenspitzen oberhalb des bestimmten Schwellenwerts nach den beiden diskreten Fourier-Transformationen zu vergleichen, derart, dass die Amplitudenspitzen parasitärer Signale beseitigt werden und die Amplitudenspitzen guter empfangener FSK-Hochfrequenzsignale ausgewählt werden, und
f) Korrigieren der Frequenz der Oszillationssignale (So) des Hilfsoszillators (5) auf der Grundlage der Differenz zwischen der Frequenz einer ausgewählten Amplitudenspitze und einer erwarteten Frequenz der Zwischensignale unter Berücksichtigung der positiven und/oder negativen Abweichung der Modulation der Daten in den abgetasteten Zwischensignalen.

10. Verfahren nach Anspruch 9, **dadurch gekennzeichnet, dass** die Ergebnisse der ersten und der zweiten diskreten Fourier-Transformation in der Auswahleinrichtung (12) gespeichert werden, die die großen Amplitudenspitzen oberhalb des bestimmten Schwellenwerts bestimmt, um ein Steuersignal (Err) an den Hilfsoszillator zu liefern, um die Frequenz der Oszillationssignale (So) als Funktion der Differenz zwischen der Frequenz mindestens einer detektierten relevanten Amplitudenspitze und einer erwarteten Frequenz der Zwischensignale zu korrigieren.

11. Verfahren nach Anspruch 9, **dadurch gekennzeichnet, dass** die Zwischensignale in der Abtastschaltung abgetastet werden, um an 2048 Punkten abgetastete Zwischensignale an die Verarbeitungsschaltung zu liefern.

12. Verfahren nach Anspruch 9, **dadurch gekennzeichnet, dass** die erste Phase der Erfassung und der diskreten Fourier-Transformation der Schritte a) und b) in Bezug auf die zweite Phase der Erfassung und der diskreten Fourier-Transformation der Schritte c) und d) mindestens um eine Zwischenphase der Erfassung und der diskreten Fourier-Transformation abgetasteter Zwischensignale zeitlich verschoben ist.

13. Verfahren nach Anspruch 9, **dadurch gekennzeichnet, dass** die Auswahleinrichtung (12) einen Algorithmus zum Suchen nach n Vektoren, vorzugsweise 4 relevanten Vektoren, ausführt, um die Amplitudenspitzen oberhalb des bestimmten Schwellenwerts, die von den Amplitudenspitzen verschieden sind, die durch die parasitären Störsignale erzeugt werden, auszuwählen.

14. Verfahren nach Anspruch 9, **dadurch gekennzeichnet, dass** jede diskrete Fourier-Transformation in der Verarbeitungsschaltung (11) in einer Frequenzbandbreite ausgeführt wird, die auf die erwartete Frequenz der Zwischensignale zentriert ist und kleiner als 400 kHz ist und vorzugsweise gleich 200 kHz ist und 200 Bänder von je 1 kHz besitzt.

## Claims

1. High sensitivity and low rate FSK radio frequency signal receiver (1), said receiver including:
- an antenna (2) for receiving FSK radio frequency signals,
- at least one low noise amplifier (3) for amplifying and filtering the signals picked up by the antenna,
- a local oscillator (5) with a quartz resonator for supplying oscillating signals (So),
- at least one mixer unit (4) for mixing the filtered and amplified incoming signals with the oscillating signals supplied by the local oscillator, in order to produce intermediate signals (INT), whose frequency is equal to the difference between the frequency of the high frequency signals and a carrier frequency of the incoming signals,
- a broadband or polyphase filter (8) for filtering the intermediate signals, and
- an intermediate signal sampler (10) for supplying sampled intermediate signals to a high sensitivity demodulation stage (13), which supplies data signals (D_{OUT}),
**characterized in that** the receiver also includes a processing circuit (11), which is able to perform at least one discrete Fourier transform on the basis of the sampled intermediate signals, in order to determine the difference between the frequency of a signal amplitude peak within the signal frequency domain above a determined threshold and the expected frequency of the intermediate signals (INT), and a selector (12) at the output of the processing circuit (11), which receives one or several results per discrete Fourier transform of the sampled intermediate signals, said selector (12) being arranged for checking the frequency error relative to the expected frequency of the intermediate signals, taking account of the positive and/or negative data modulation deviation in the sampled intermediate signals, and for supplying a control signal (Err) to the local oscillator (5) to correct the frequency of the oscillating signals (So) from the local oscillator according to the determined frequency error, and **in that** the high sensitivity demodulation stage (13) is able to demodulate the data from the sampled intermediate signals when the frequency of the oscillating signals is corrected.

2. Receiver (1) according to claim 1, **characterized in that** the selector (12) includes a memory unit for storing the results of one or several discrete Fourier transforms of the sampled intermediate signals, which are performed in the processing circuit (11).

3. Receiver (1) according to claim 2, **characterized in that** the selector (12) is arranged to operate a search algorithm with n large vectors on the basis of the stored results of the discrete Fourier transforms performed in the processing circuit (11), a comparison of amplitude peaks in the stored results that are above a determined threshold, being so performed in the selector to detect any spurious peak in incoming interfering signals, and to select one or several amplitude peaks in the right incoming FSK radio frequency signals above the determined threshold, to determine the frequency error relative to the expected frequency of the intermediate signals, and to supply a control signal (Err) to the local oscillator (5) for the frequency correction of the oscillating signals (So).

4. Receiver (1) according to any of claims 1 to 3, **characterized in that** the local oscillator (5) includes a sigma-delta frequency synthesiser (6), which includes a quartz resonator for supplying a reference signal in the phase lock loop and for supplying oscillating signals (So) at the output of a voltage controlled oscillator, and **in that** the local oscillator (5) also includes an adder (7) for adding a signal at a determined base frequency (f₀+f(IF)) to initialise the oscillating signal frequency, and a control signal (Err) supplied by the selector (12) depending upon the frequency error determined in the selector, the output of the adder controlling the frequency synthesiser in order to adapt the frequency of the oscillating signals.

5. Receiver (1) according to any of the preceding claims, **characterized in that** the high sensitivity demodulation stage (13) includes a first narrow band digital filter (14) for filtering the sampled intermediate signals having a positive frequency deviation (f(IF)+Δf) and a second narrow band digital filter (15) for filtering the sampled intermediate signals having a zero or negative frequency deviation (f(IF)-Δf), **in that** the signals supplied by the first digital filter (14) pass through a first energy detector (16), **in that** the signals supplied by the second digital filter (15) pass through a second energy detector (17), and **in that** the output signals of the second energy detector (17) are subtracted in a subtractor (18) from the output signals of the first energy detector (16) to supply data signals (D_{OUT}).

6. Receiver (1) according to claim 5, **characterized in that** each narrow band digital filter is configured to have a bandwidth on the order of 2 kHz, to filter sampled intermediate signals originating from low rate FSK radio frequency signals picked up by the receiver.

7. Receiver (1) according to any of claims 1 to 4, **characterized in that** the high sensitivity demodulation stage (13) includes a first DFT demodulator (24) for demodulating the sampled intermediate signals having a positive frequency deviation (f(IF)+Δf), and a second DFT demodulator (25) for demodulating the sampled intermediate signals having a zero or negative frequency deviation (f(IF)-Δf), **in that** the two DFT demodulators perform a sliding discrete Fourier transform of the sampled intermediate signals with a determined number of bands, preferably reduced to single units, within a narrow frequency range, and **in that** the output signals of the second DFT demodulator (25) are subtracted in a substractor (18) from the output signals of the first DFT demodulator (24) in order to supply data signals (D_{OUT}).

8. Receiver (1) according to claim 7, **characterized in that** the narrow frequency range of the two demodulators is on the order of 2 kHz, for demodulating the sampled intermediate signals from the low rate FSK radio frequency signals picked up by the receiver.

9. Method of activating the high sensitivity and low rate FSK radio frequency signal receiver according to any of the preceding claims, **characterized in that** the method includes a first series of steps with a succession of phases in time for the acquisition and discrete Fourier transform of the sampled intermediate signals, the first series of steps consisting in:
a) performing a first acquisition of the FSK radio frequency signals picked up by the receiver for frequency conversion in the mixer unit (4) via the oscillating signals (So) from the local oscillator (5), and sampling the intermediate signals (INT) at the mixer unit output, in order to produce first sampled intermediate signals,
b) performing a first discrete Fourier transform of the first sampled intermediate signals in the processing circuit (11),
c) performing a second acquisition of the FSK radio frequency signals picked up by the receiver for frequency conversion in the mixer unit (4) via the oscillating signals (So) from the local oscillator (5) and for sampling the intermediate signals (INT) at the mixer unit output, in order to produce second sampled intermediate signals,
d) performing a second discrete Fourier transform of the second sampled intermediate signals in the processing circuit (11), and
**in that** the method includes a second series of steps following the first series of steps, consisting in:
e) checking the results of the two discrete Fourier transforms in the selector (12), in order to compare the amplitude peaks detected above the determined threshold after the two discrete Fourier transforms, so as to remove the amplitude peaks of spurious signals and select the amplitude peaks of the right incoming FSK radio frequency signals, and
f) correcting the frequency of the oscillating signals (So) from the local oscillator (5) on the basis of the difference between the frequency of a selected amplitude peak and the expected intermediate signal frequency taking account of the positive and/or negative data modulation deviation in the sampled intermediate signals.

10. Method according to claim 9, **characterized in that** the results of the first and second discrete Fourier transforms are stored in the selector (12), which determines any large amplitude peaks above the determined threshold, in order to supply a control signal (Err) to the local oscillator to correct the frequency of the oscillating signals (So) according to the difference between the frequency of at least one detected large amplitude peak and the expected intermediate signal frequency.

11. Method according to claim 9, **characterized in that** the intermediate signals are sampled in the sampler to supply sampled intermediate signals to the processing circuit on 2048 points.

12. Method according to claim 9, **characterized in that** the first acquisition and discrete Fourier transform phase of steps a) and b) is separated in time from the second acquisition and discrete Fourier transform phase of steps c) and d), by at least one intermediate phase of sampled intermediate signal acquisition and discrete Fourier transform.

13. Method according to claim 9, **characterized in that** the selector (12) operates a search algorithm with n vectors, preferably 4 large vectors, to select any amplitude peaks above the determined threshold other than the amplitude peaks generated by spurious interfering signals.

14. Method according to claim 9, **characterized in that** each discrete Fourier transform is performed in the processing circuit (11) on a frequency bandwidth centred on the expected intermediate signal frequency, and is less than 400 kHz, and preferably equal to 200 kHz with 200 bands of 1 kHz.
